# EUROPÄISCHE PATENTSCHRIFT

(11) **EP 2 989 301 B1**
(45) Veröffentlichungstag und Bekanntmachung des Hinweises auf die Patenterteilung: **06.10.2021**
(21) Anmeldenummer: 14719222.3
(22) Anmeldetag: 15.03.2014
(51) Int. Cl.: F01K 27/00, F03G 7/00

(54) **THERMOPHORETISCHE KRAFTMASCHINE**
THERMOPHORETIC MACHINE
MACHINE MOTRICE THERMOPHORÉTIQUE

(30) Priorität: 25.04.2013 DE 102013007189
(43) Veröffentlichungstag der Anmeldung: 02.03.2016
(73) Patentinhaber: Forschungszentrum Jülich GmbH, 52425 Jülich (DE)
(72) Erfinder: RIPOLL, Marisol, 52428 Jülich (DE); YANG, Mingcheng, Beijing 100190 (CN)
(86) Internationale Anmeldenummer: PCT/DE2014/000135
(87) Internationale Veröffentlichungsnummer: WO 2014/173382

(56) Entgegenhaltungen:
- WO-A2-2006/025851
- US-A1- 2002 014 158
- US-A1- 2006 000 215
- US-A1- 2010 011 768
- WEI WANG ET AL: "Small power: Autonomous nano- and micromotors propelled by self-generated gradients", NANO TODAY, Bd. 8, Nr. 5, 1. Oktober 2013 (2013-10-01) , Seiten 531-554, XP055127247, ISSN: 1748-0132, DOI: 10.1016/j.nantod.2013.08.009
- Dsudo ET AL: "Perspective: Nanomotors without moving parts that propel themselves in solution", THE JOURNAL OF CHEMICAL PHYSICS, 8. Januar 2013 (2013-01-08), Seite 20901, XP055127274, Gefunden im Internet: URL:http://www.chem.utoronto.ca/~rkapral/P apers/meso-perspective-JCP-2013.pdf [gefunden am 2014-07-07]
- Daniel Lüsebrink: "Colloidal Suspensions in Temperature Gradients with Mesoscopic Simulations", , 1. Januar 2011 (2011-01-01), XP055127293, Gefunden im Internet: URL:http://kups.ub.uni-koeln.de/4410/1/the sis_published.pdf [gefunden am 2014-07-07]
- MINGCHENG YANG ET AL: "A self-propelled thermophoretic microgear", SOFT MATTER, Bd. 10, Nr. 7, 1. Januar 2014 (2014-01-01) , Seite 1006, XP055127382, ISSN: 1744-683X, DOI: 10.1039/c3sm52417e
- DONKOV A.A. ET AL: "MOMENTUN AND MASS FLUXES IN A GAS CONFINED BETWEEN PERIODICALY STRUCTURED SURFACES AT DIFFERENT TEMPERATURES", PHYSICAL REVIEW E, vol. 84, no. 1, 2011, page 16304,

## Beschreibung

Die Erfindung betrifft eine Vorrichtung zur Umwandlung von Wärme in Bewegungsenergie.

### Stand der Technik

Zur Manipulation von Materie auf der Nanoskala und zur Miniaturisierung von Geräten und Versuchsaufbauten ("lab on a chip") ist es erforderlich, gezielt Bewegungen in dieser Größenordnung anzuregen. Dies geschieht üblicherweise mit Vorrichtungen, die elektrische Energie in Bewegungsenergie umwandeln. Derartige Vorrichtungen sind technisch vergleichsweise anspruchsvoll, weil sie elektrisch kontaktiert werden müssen, und häufig durch filigrane bewegliche Teile ausfallgefährdet.

Die Umwandlung thermischer Energie in Bewegungsenergie ist wesentlich einfacher und mit weniger empfindlichen beweglichen Teilen zu realisieren. Aus (A. A. Donkov, S. Tiwari, T. Lang, S. Hardt, A. Klar, W. Ye, "Momentum and mass fluxes in a gas confined between periodically structured surfaces at different temperatures", Physical Review E 84, 016304 (2011)) ist eine Kraftmaschine bekannt, in der eine unstrukturierte und eine asymmetrisch strukturierte Oberfläche einander gegenüberliegen. Werden beide Oberflächen auf unterschiedliche Temperaturen gebracht, bildet sich entlang der strukturierten Oberfläche ein Temperaturgradient. Dieser regt ein zwischen den beiden Oberflächen eingeschlossenes verdünntes Arbeitsgas dazu an, von kälteren in wärmere Bereiche zu fließen. Dabei kann es zugleich auch eine Kraft auf die strukturierte Oberfläche ausüben und diese in Bewegung versetzen, sofern sie beweglich gelagert ist.

Nachteilig ist der auf diese Weise angetriebene Gasfluss auf die Richtung von kälteren in wärmere Gebiete festgelegt. Weiterhin muss das Arbeitsgas stark verdünnt sein, damit seine Moleküle auf einer großen freien Weglänge durch den Temperaturgradienten beschleunigt werden können. Es fließt daher immer nur eine sehr geringe Stoffmenge Arbeitsgas, so dass auch eine beweglich gelagerte Oberfläche nur mit einer sehr geringen Kraft angetrieben werden kann.

### Aufgabe und Lösung

Es ist daher die Aufgabe der Erfindung, die durch Anlegen einer Temperaturdifferenz zwischen zwei Oberflächen erzeugte Bewegung besser steuerbar zu machen und die auf diesem Wege erzeugbare Antriebskraft zu steigern.

Diese Aufgabe wird erfindungsgemäß gelöst durch eine Vorrichtung gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde eine Vorrichtung zur Umwandlung von Wärme in Bewegungsenergie entwickelt. Diese Vorrichtung umfasst zwei Oberflächen, die einen Hohlraum einschließen, wobei mindestens eine der Oberflächen in mindestens einer zu der Oberfläche tangentialen Richtung asymmetrisch strukturiert ist, sowie Mittel, um beide Oberflächen auf verschiedene Temperaturen zu bringen.

Erfindungsgemäß ist in dem Hohlraum eine Arbeitsflüssigkeit aus mindestens einer ersten Spezies von Teilchen angeordnet, in der mindestens eine auf der strukturierten Oberfläche angeordnete und/oder in der Arbeitsflüssigkeit enthaltene zweite Spezies von Teilchen bei Anlegen eines lokalen Temperaturgradienten zu einer Driftbewegung angeregt wird. Zugleich ist die Strukturierung der Oberfläche so beschaffen, dass sich bei Vorlage der verschiedenen Temperaturen an den beiden Oberflächen in der Arbeitsflüssigkeit ein lokaler Temperaturgradient entlang der tangentialen Richtung ausbildet. Im Ergebnis treibt dann die durch den Temperaturgradienten hervorgerufene thermophoretische Driftbewegung eine gerichtete Bewegung der Arbeitsflüssigkeit und/oder der Oberflächen zueinander an. Die zweite Spezies kann beispielsweise in Form fester Partikel oder auch als gelöster Feststoff in der Arbeitsflüssigkeit enthalten sein. Es kann aber beispielsweise auch eine zweite Flüssigkeit sein, die mit der ersten gemischt ist, oder ein Gas, das in der Arbeitsflüssigkeit gelöst oder in Form von Blasen in ihr enthalten ist. Neben den beiden Spezies können in der Arbeitsflüssigkeit noch weitere Bestandteile, beispielsweise in Lösung, enthalten sein, die die thermophoretische Wechselwirkung zwischen den beiden Spezies verändern.

Wenn die zweite Spezies auf der strukturierten Oberfläche vorhanden ist, hat dies den Vorteil, dass mit einer einkomponentigen Arbeitsflüssigkeit gearbeitet werden kann und dass es nur ein einziges Verbrauchsmaterial gibt. Dazu kann der Grundkörper, dessen Oberfläche die strukturierte Oberfläche ist, insbesondere vollständig aus dieser zweiten Spezies bestehen. Er kann aber auch mit der zweiten Spezies beschichtet oder gar nur in Teilbereichen der strukturierten Oberfläche mit dieser Spezies vergütet sein. Zum Antrieb trägt die zweite Spezies nur an den Orten bei, an denen im Betrieb ein lokaler Temperaturgradient herrscht. Wenn die zweite Spezies sehr kostbar ist, kann es daher sinnvoll sein, sie nur an diesen Orten auf die strukturierte Oberfläche aufzubringen. Die thermophoretische Drift der zweiten Spezies auf der strukturierten Oberfläche in der ersten Spezies der Arbeitsflüssigkeit bewegt die strukturierte Oberfläche relativ zur Arbeitsflüssigkeit. Dazu muss diese Oberfläche bzw. der Grundkörper, dessen Oberfläche sie ist, beweglich gelagert sein. Die Arbeitsflüssigkeit muss in dieser Ausgestaltung nicht einkomponentig sein. Es können in ihr noch weitere Bestandteile, beispielsweise in Lösung, enthalten sein, die die thermophoretische Wechselwirkung zwischen der Spezies in der Arbeitsflüssigkeit und der Spezies auf der strukturierten Oberfläche verändern.

Wenn die zweite Spezies in der Arbeitsflüssigkeit selbst enthalten ist, kann die thermophoretische Drift der beiden Spezies gegeneinander ebenfalls die strukturierte Oberfläche antreiben, sofern diese beweglich gelagert ist. Zugleich kann die Arbeitsflüssigkeit selbst angetrieben werden. Eine Arbeitsflüssigkeit mit zwei Spezies hat den zusätzlichen Vorteil, dass durch Veränderung des Konzentrationsverhältnisses der beiden Spezies die Stärke und Richtung der Bewegung verändert werden können. Die Arbeitsflüssigkeit kann zu diesem Zweck im Betrieb einfacher verändert oder ausgetauscht werden als die strukturierte Oberfläche bzw. der Grundkörper, dessen Oberfläche sie ist.

Die thermophoretische Drift ist auf der Ebene der einzelnen Teilchen ein statistisches Phänomen. Indem die Oberfläche asymmetrisch strukturiert ist, erhält sie in der Mittelung über das Ensemble aller Teilchen eine Vorzugsrichtung, weil insgesamt signifikant mehr Teilchen zu einer Bewegung in dieser Vorzugsrichtung beitragen als zu einer Bewegung in die Gegenrichtung.

Der wesentliche Unterschied zu der Vorrichtung gemäß Stand der Technik besteht darin, dass die Bewegung nicht auf die Bewegung einer einzigen Teilchenspezies in der Richtung von kälteren zu wärmeren Gebieten festgelegt ist, sondern eine thermophoretisch getriebene Relativbewegung zweier Teilchenspezies zueinander ist. Maßgeblich für die Bewegung ist also nicht das Verhalten einer einzelnen Spezies, sondern eine Wechselwirkung zwischen zwei Spezies. Dies bietet wesentlich mehr Freiheitsgrade, sowohl die Stärke als auch die Richtung der Bewegung durch die Wahl der beiden Spezies und die Festlegung der sonstigen Bedingungen (etwa Druck oder mittlere Temperatur) in dem Hohlraum, von denen die Thermophorese abhängt, festzulegen. Stärke und Richtung der Bewegung können vorteilhaft auch im laufenden Betrieb umgeschaltet werden, beispielsweise durch Änderung des Drucks, der Temperatur oder des Konzentrationsgefälles zwischen den Spezies.

Nach dem Stand der Technik konnte die Richtung der Bewegung nur umgeschaltet werden, indem die Richtung des Temperaturgradienten entlang der strukturierten Oberfläche umgekehrt wurde. Der Temperaturgradient wird jedoch wesentlich durch die Strukturierung der Oberfläche bestimmt. Um ihn umzukehren, reicht es also nicht notwendigerweise aus, die zwischen beiden Oberflächen angelegte Temperaturdifferenz umzukehren. Nur bei bestimmten Sonderfällen von Strukturierungen kehrt sich mit der Temperaturdifferenz zwischen den beiden Oberflächen auch der Temperaturgradient entlang der strukturierten Oberfläche um.

Im Unterschied zum Stand der Technik hängen Stärke und Richtung der Bewegung nicht nur von der Arbeitsflüssigkeit selbst ab, sondern auch von den Materialien der Oberflächen. Zum Einen kann die strukturierte Oberfläche selbst mit der zweiten Spezies, die die Driftbewegung ausführt, funktionalisiert sein. Zum Anderen kann eine der Oberflächen auf eine der Spezies in einer aus zwei Spezies bestehenden Arbeitsflüssigkeit eine besondere attraktive oder repulsive Wirkung haben und so die Reaktion der Spezies auf den Temperaturgradienten verändern.

Weiterhin können die an der Driftbewegung beteiligten Stoffmengen erheblich größer sein als die Stoffmengen der nach dem Stand der Technik eingesetzten verdünnten Gase, da Flüssigkeiten und Festkörper eine um einen Faktor von ca. 1000 höhere Dichte haben als verdünnte Gase. Damit hat die erfindungsgemäße Vorrichtung das Potential, eine größere Antriebskraft zu erzeugen als die Vorrichtung gemäß Stand der Technik.

In einer besonders vorteilhaften Ausgestaltung der Erfindung ist die strukturierte Oberfläche der Umfang eines drehbar gelagerten Rades. Die Driftbewegung erzeugt dann ein Drehmoment, das dieses Rad antreibt.

In einer weiteren besonders vorteilhaften Ausgestaltung der Erfindung verlaufen beide Oberflächen bis auf die Strukturierung zueinander parallel und sind starr miteinander gekoppelt. Beide Oberflächen schließen dann einen Kanal ein, durch den die Arbeitsflüssigkeit getrieben wird.

Vorteilhaft steigt, entlang der tangentialen Richtung gesehen, die Topographie der strukturierten Oberfläche in der Normalen zu dieser Oberfläche zunächst mit einer ersten Rate an und fällt dann mit einer von der ersten Rate verschiedenen zweiten Rate ab. Das beste Beispiel hierfür ist eine sägezahnförmige Strukturierung, bei der die Topographie zunächst in der Form einer schiefen Ebene ansteigt und dann senkrecht abfällt. Derartige Strukturen sind besonders asymmetrisch, so dass die Vorzugsrichtung der Bewegung besonders ausgeprägt ist.

Vorteilhaft wiederholt die Strukturierung der strukturierten Oberfläche sich entlang der tangentialen Richtung periodisch. Die Bewegung kann dann gleichförmig sein und sich ebenfalls wiederholen, insbesondere wenn die strukturierte Oberfläche der Umfang eines Rades ist.

Vorteilhaft besteht mindestens eine der Oberflächen aus Polystyrol, Latex, Quarz, Gold oder einem Polyvinylalkohol, oder sie ist damit beschichtet. Diese Materialien zeigen eine besonders starke thermophoretische Kraftwechselwirkung mit der Arbeitsflüssigkeit.

In einer besonders vorteilhaften Ausgestaltung der Erfindung ist die Arbeitsflüssigkeit ein Lösungsmittel, in dem ein Feststoff gelöst, suspendiert oder dispergiert ist. Ein Lösungsmittel als erste Spezies und ein Feststoff als zweite Spezies unterscheiden sich besonders stark in ihrer Reaktion auf den Temperaturgradienten, so dass die thermophoretische Driftbewegung besonders stark ist. Wenn der Feststoff gelöst ist, hat dies den weiteren Vorteil, dass er sich nicht in der Vorrichtung anlagern und diese lokal verstopfen kann.

Das Lösungsmittel ist vorteilhaft Wasser oder ein organisches Lösungsmittel, insbesondere Ethanol oder ein anderer Alkohol, Benzol oder Toluol. Der Feststoff ist vorteilhaft ein Salz, ein Polymer oder ein Stoff, der mit dem Lösungsmittel ein Kolloid bildet.

Vorteilhaft sind Mittel zur Umschaltung der Geometrie mindestens einer Oberfläche zwischen mindestens zwei Zuständen vorgesehen. Damit kann im laufenden Betrieb die Stärke oder Richtung der Bewegung gewechselt werden. Beispielsweise können die beiden Flanken einer sägezahnförmigen Strukturierung gegeneinander vertauscht werden, um die Bewegungsrichtung umzukehren.

In einer weiteren besonders vorteilhaften Ausgestaltung sind Mittel zur Änderung des Drucks oder der mittleren Temperatur in der Arbeitsflüssigkeit vorgesehen. Die Reaktion der beiden Spezies auf den Temperaturgradienten kann druck- oder temperaturabhängig sein. Über die Druck- oder Temperaturänderung, die vermittelt durch die Arbeitsflüssigkeit aus der Distanz in den Hohlraum eingebracht werden kann, lassen sich dann Stärke und Richtung der Bewegung einstellen.

In einer weiteren vorteilhaften Ausgestaltung sind Mittel zur Beaufschlagung der Arbeitsflüssigkeit mit einem elektrischen und/oder magnetischen Feld vorgesehen. Dann kann zum Einen eine elektrische und/oder magnetische Kraft direkt mit der thermophoretischen Kraft zusammenwirken. Zum Anderen kann ein derartiges Feld Moleküle orientieren, so dass die Wechselwirkung der Arbeitsflüssigkeit mit den Oberflächen verändert werden kann. Dadurch lassen sich Stärke und Richtung der Bewegung durch eine Änderung des Felds berührungslos beeinflussen.

Der in der Beschreibungseinleitung zitierte Stand der Technik (Donkov et al.) treibt ein Zahnrad durch Stöße mit Gasteilchen des Arbeitsgases per saldo in eine Richtung, indem die beiden Seiten eines jeden Zahnradzahnes so ausgebildet sind, dass sie mit unterschiedlichen Wahrscheinlichkeiten von den Teilchen des Arbeitsgases getroffen werden. Die Teilchen des Arbeitsgases wechselwirken nicht miteinander, da das Arbeitsgas verdünnt ist. Demgegenüber wird erfindungsgemäß der thermophoretische Antrieb genutzt, bei dem durch einen Temperaturgradienten eine Teilchenspezies zu einer Relativbewegung gegenüber einer in der Arbeitsflüssigkeit vorhandenen anderen Spezies veranlasst wird. Die Strukturierung der Oberfläche, etwa in Form von Zähnen eines Zahnrads, hat hier nicht mehr die Funktion, die Auftreffwahrscheinlichkeit für Teilchen zu verändern. Sie dient zur Erzeugung des Temperaturgradienten, der wiederum eine thermophoretische Kraftwechselwirkung zwischen den beiden Spezies erzeugt. Die asymmetrische Form der Strukturierung sorgt dafür, dass sich die über die ganze Oberfläche gemittelten Kraftwechselwirkungen nicht aufheben, sondern es eine Nettokraft bzw. ein Nettodrehmoment in eine Richtung gibt und eine Relativbewegung angetrieben wird.

Dabei kann diese Strukturierung auch mit weiteren Maßnahmen zur Ausbildung des Temperaturgradienten zusammenwirken. Beispielsweise kann die strukturierte Oberfläche oder ein Körper (etwa ein Zahnrad), auf dem sie sich befindet, mit einem Laserstrahl erwärmt werden. Die Oberfläche oder der Körper können aber beispielsweise auch von einem Kanal durchzogen sein, durch den ein heizendes oder kühlendes Medium geführt werden kann. Entscheidend für das Funktionieren des Antriebs ist nur, dass ein Temperaturgradient entlang der tangentialen Richtung erzeugt wird, so dass eine Nettobewegung in dieser Richtung angeregt wird. Mit Blick auf die sonstigen Randbedingungen in der Anwendung, in der die erfindungsgemäße Kraftmaschine eingesetzt werden soll, wird der Fachmann aus dem hier nicht erschöpfend darstellbaren Katalog der Maßnahmen eine Auswahl treffen.

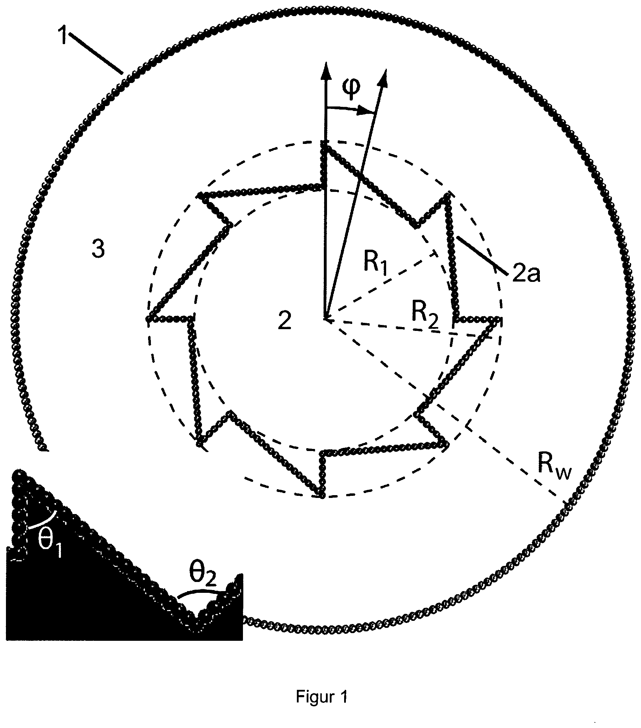

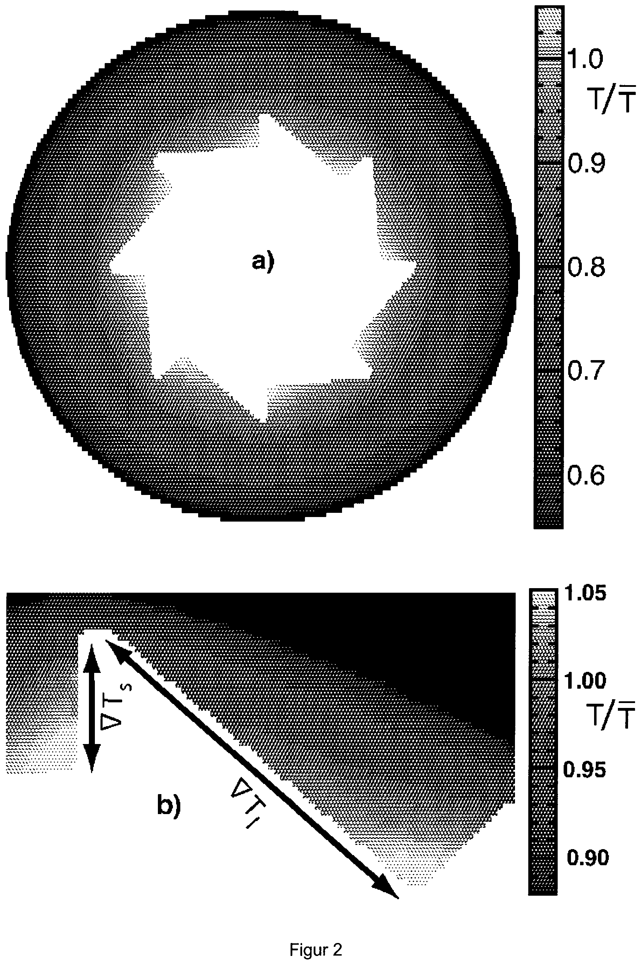

Für eine Abschätzung der erzielbaren Drehgeschwindigkeit wurde ein Zahnrad aus Polystyren mit einem Durchmesser von 50 µm und einer Dicke von 1 µm als hydrodynamische Scheibe modelliert, deren Trägheitsmoment von der flächigen Reibung an der Arbeitsflüssigkeit dominiert wird. Ursache für diese Reibung ist die von Null verschiedene Viskosität der Arbeitsflüssigkeit (Wasser). Das Verhalten der Arbeitsflüssigkeit wurde mit mesoskopischer Vielteilchen-Stoßdynamik (multi-particle collision dynamics, MPC) modelliert. Das Zahnrad sowie seine Wechselwirkung mit der Arbeitsflüssigkeit wurden mit Molekulardynamik (MD) untersucht, vergleich hierzu auch die Beschreibung zu den Figuren 1 und 2. Für ein 1 µm großes Polystyren-Partikel in Wasser ist aus Experimenten bekannt (F. M. Weinert, D. Braun, Physical Review Letters 101, 168301 (2008)), dass dieses einen Thermodiffusionsfaktor in der Größenordnung 5000 hat. Der Thermodiffusionsfaktor ist die Proportionalitätskonstante zwischen der auf das Partikel ausgeübten thermophoretischen Kraft und dem lokalen Temperaturgradienten. Jede lange Flanke eines Zahnradzahns wurde nun als aus 100 überlappenden Polystyren-Partikeln (Beads) bestehend angenommen. Diese Beads erfahren in der Arbeitsflüssigkeit bei Anwesenheit eines Temperaturgradienten eine thermophoretische Kraft. Dabei wird diese Kraft im Vergleich zu der auf ein isoliertes Partikel um einen Faktor 10 abgeschwächt, weil ein in die lange Flanke des Zahnradzahns eingebettetes Partikel nur auf einem kleinen Teil seiner Oberfläche mit der Arbeitsflüssigkeit in Kontakt steht. Für einen Temperaturgradienten von 0,1 K/µm führt die Abschätzung auf eine Drehgeschwindigkeit von 1 Umdrehung pro Sekunde.

Erweiterungen des Modells, etwa die Berücksichtigung eines Temperaturgradienten innerhalb des Zahnrades auf Grund einer moderaten Wärmeleitfähigkeit, können das Ergebnis quantitativ ändern, ändern aber nichts an der qualitativen Tatsache, dass eine Rotation in Gang gesetzt wird. Um einen solchen Temperaturgradienten in die Simulation einzubeziehen, müssten interne Freiheitsgrade der Partikel zugelassen werden. Das einfachste Modell hierfür wäre ein Zahnrad, bei dem nur die Partikel auf der Oberfläche interne Freiheitsgrade haben, nicht jedoch die Partikel im Inneren. Dies lässt sich beispielsweise experimentell realisieren, indem das Zahnrad einen Grundkörper aus einem ersten Material umfasst, der mit einem zweiten Material beschichtet wird. Ein Zahnrad, bei dem alle Partikel interne Freiheitsgrade haben, würde sich in der Realität qualitativ ähnlich verhalten, es wäre aber wesentlich schwieriger zu simulieren.

Für weitere Details zu der Simulation wird auf das nach dem Prioritätstag veröffentlichte Paper (M. Yang, M. Ripoll, "Self-Propelled Thermophoretic Microgear", Soft Matter, DOI: 10.1039/C3SM52417E (2013)) verwiesen. Das Zahnrad kann alternativ auch als zylindrische Säule oder als Hindernis in einem sehr dünnen Kanal modelliert werden. Die Simulation führt dann zu qualitativ ähnlichen Ergebnissen.

Die eingesetzte Simulationsmethode MPC wurden zuerst 1999 von Kapral vorgeschlagen (A. Malevanets, R. Kapral, "Mesoscopic model for solvent dynamics", Journal of Chemical Physics 110, 8605 (1999)). Sie wurde seither auf viele bekannte Probleme angewendet, etwa auf das Verhalten von Polymeren, Kolloiden und sogar roten Blutkörperchen. Der Review-Artikel (G. Gompper, T. Ihle, D.M. Kroll, R.G. Winkler, "Multi-Particle Collision Dynamics: A Particle-Based Mesoscale Simulation Approach to the Hydrodynamics of Complex Fluids", Advances in Polymer Sciences 221, 1-87 (2009)) gibt einen Überblick über derartige Anwendungen und diskutiert die zufriedenstellende Übereinstimmung der erhaltenen Ergebnisse sowohl mit analytischen Überlegungen als auch mit experimentellen Daten.

Derzeit laufen Arbeiten der Erfinder zur experimentellen Realisierung. Zahnräder nach dem hier und in den Figuren beschriebenen Muster, aber mit einem Durchmesser zwischen 350 und 650 µm wurden bereits durch konventionelle mechanische Bearbeitung (Bohren) hergestellt. Es ist beabsichtigt, Zahnräder mit Durchmessern von 50 µm und darunter durch optische Lithographie herzustellen. Mit Elektronenstrahllithographie sind auch Zahnräder, die um bis zu zwei Größenordnungen kleiner sind, in Reichweite.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1:: Ausführungsbeispiel der erfindungsgemäßen Vorrichtung in Aufsicht.
- Figur 2:: Simulation der lokalen Temperaturverteilung für das in Figur 1 gezeigte Ausführungsbeispiel.
- Figur 3:: Abhängigkeit von Richtung und Geschwindigkeit der Drehbewegung für das Ausführungsbeispiel gemäß Figur 1 in Abhängigkeit der Temperaturdifferenz (Teilbild a) und der Materialeigenschaften (Teilbild b).
- Figur 4:: Funktion des in Figur 1 gezeigten Ausführungsbeispiels als Pumpe.
- Figur 5:: Lineare Pumpe als weiteres Ausführungsbeispiel der erfindungsgemäßen Vorrichtung.

Figur 1 zeigt ein Ausführungsbeispiel der erfindungsgemäßen Vorrichtung. Eine unstrukturierte Oberfläche 1 und ein Zahnrad 2, dessen Oberfläche die strukturierte Oberfläche ist, sind konzentrisch zueinander angeordnet. In dem Hohlraum 3 zwischen beiden Oberflächen befindet sich eine einkomponentige Arbeitsflüssigkeit. Das Zahnrad hat entlang seines Umfangs acht Zähne, an deren Grenzen die strukturierte Oberfläche jeweils alternierend um θ₁=40° bzw. um θ₂=90° geknickt ist. In der tangentialen Richtung entlang des Außenumfangs des Zahnrades ist die Strukturierung somit asymmetrisch, weil in der einen Umlaufrichtung immer ein anderer Knick zu sehen ist als in der anderen Umlaufrichtung. Der Innenumfang R₁ des Zahnrads 2 ist 300 µm und sein Außenumfang R₂ 400 µm. Die Oberfläche 1 ist ein Zylinder mit einem Radius R_{W} von 700 µm. Die Arbeitsflüssigkeit ist Wasser, Ethanol oder Toluol. Das Zahnrad 2 besteht aus einem massiven Grundkörper aus Quarz mit einem Trägheitsmoment von 10⁶ µg/µm³, der an seiner äußeren Oberfläche mit Monomer-Beads 2a aus Gold beschichtet ist. Eine Drehung des Zahnrads im Uhrzeigersinn entspricht einer Zunahme des Drehwinkels ϕ.

Das Verhalten dieses Zahnrads wurde in einer zweidimensionalen Simulation studiert, in der das Verhalten der Arbeitsflüssigkeit mit der als Vielteilchen-Stoßdynamik (multi-particle collision dynamics, MPC) bekannten mesoskopischen Methode und das Verhalten des Zahnrads sowie seine Wechselwirkung mit der Arbeitsflüssigkeit mit Molekulardynamik (MD) modelliert wurden. Diese Hybridmodellierung trägt der Tatsache Rechnung, dass sich die charakteristischen Längen- und Zeitskalen des Verhaltens von Zahnrad und Arbeitsflüssigkeit jeweils um Größenordnungen unterscheiden. In der MPC-Modellierung der Arbeitsflüssigkeit alternieren Schritte, in denen sich die Teilchen der Flüssigkeit ballistisch bewegen, und Schritte, in denen sie an ihrem aktuellen Ort einen Stoß ausführen entsprechend der stochastischen Kollisionsregel von Ryder und Yeomans. Diese Regel gewährleistet die Erhaltung von Masse, Impuls, Energie und Drehimpuls, so dass die Simulation hydrodynamische Wechselwirkungen und Temperaturgradienten, korrekt abbildet. Sie gewährleistet auch die korrekte Abbildung von thermischen Fluktuationen. Für die Wechselwirkung zwischen der ersten Spezies von Teilchen in der Arbeitsflüssigkeit und den Beads 2a auf dem Zahnrad 2 wurde ein Potential vom Lennard-Jones-Typ, das je nach verwendeten Materialien attraktiv oder repulsiv sein kann, angenommen.

Zunächst wurde die Temperaturverteilung in der Arbeitsflüssigkeit studiert, die sich einstellt, wenn das Zahnrad 2 auf einer Temperatur T_{g} und die unstrukturierte Zylinderwand 1 auf einer niedrigeren Temperatur T_{w} gehalten wird. Figur 2 zeigt den stationären Zustand, der sich nach kurzer Zeit einstellt, in Aufsicht, wobei Teilbild b) eine Ausschnittsvergrößerung eines Zahns aus Teilbild a) ist. Die Graustufen geben jeweils das Verhältnis *T*/*T̅̅̅* der Temperatur zur mittleren Temperatur an. Es bilden sich ein lokaler Temperaturgradient ∇Tₗ entlang der langen Flanke des Zahns und ein lokaler Temperaturgradient ∇Tₛ entlang der kurzen Flanke des Zahns. Für den Antrieb des Zahnrads nutzbar ist der lokale Temperaturgradient ∇Tₗ entlang der langen Flanke des Zahns. Teilchen der zweiten Spezies auf dieser Flanke erfahren auf Grund ihrer inhomogenen Wechselwirkung mit der umgebenden Arbeitsflüssigkeit eine thermophoretische Kraft, die entweder entlang der Richtung des Temperaturgradienten (thermophil) oder aber ihr entgegengesetzt (thermophob) gerichtet ist. In beiden Fällen lässt sich die Kraft in eine radiale, auf das Zentrum des Zahnrads gerichtete Komponente und in eine tangentiale Komponente entlang des Umfangs des Zahnrads zerlegen. Letztere Komponente übt ein Drehmoment auf das Zahnrad aus.

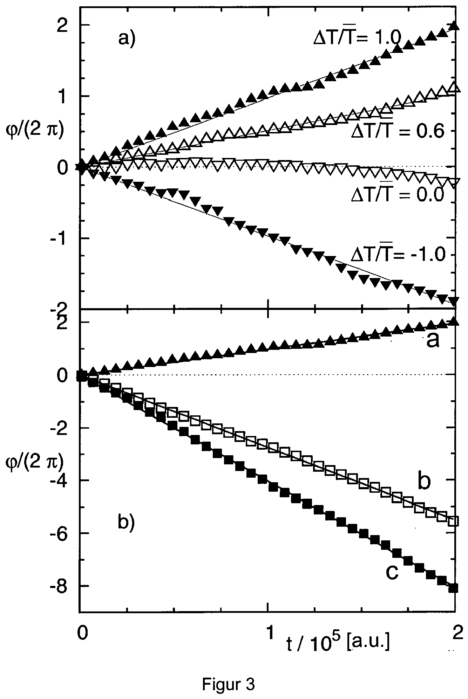

Figur 3a zeigt eine Simulation des Drehwinkels ϕ über die Zeit t in Abhängigkeit der vorgelegten Temperaturdifferenz ΔT zwischen dem Zahnrad 2 und der Wand 1. Für jede Kurve ist das Verhältnis *ΔT*/*T̅̅̅* der Temperaturdifferenz ΔT zur mittleren Temperatur *T̅̅̅* angegeben. Eine positive Drehrichtung entspricht dabei einer Drehung im Uhrzeigersinn. Je höher die vorgelegte Temperaturdifferenz ΔT, desto schneller die Drehung. Sind Zahnrad und Wand auf gleicher Temperatur, kommt die Drehung zum Erliegen. Wird die Richtung der Temperaturdifferenz umgekehrt, kehrt sich auch die Drehrichtung um. Die Drehung verschwindet auch dann, wenn die Geometrie des Zahnrads so geändert wird, dass die Zähne symmetrisch sind (Winkel θ₁=Winkel θ₂; in Figur 3a nicht eingezeichnet).

Figur 3b zeigt Simulationen des Drehwinkels ϕ über die Zeit t für ein und dieselbe Temperaturdifferenz ΔT, aber für verschiedene Wechselwirkungen zwischen den Beads 2a und der Arbeitsflüssigkeit 3, die verschiedenen Materialkombinationen entsprechen. In Kurve a ist das thermophile Material Polyvinylalkohol in Wasser mit einem attraktiven Potential vom Lennard-Jones-Typ simuliert. Kurven b und c sind für die thermophoben Materialien Quarz und Gold in Wasser mit verschieden stark repulsiven Potentialen vom Lennard-Jones-Typ simuliert. Sowohl die Richtung als auch die Geschwindigkeit der Drehbewegung lassen sich somit über die Wahl der Materialien, aber beispielsweise auch über den Druck oder die mittlere Temperatur der Arbeitsflüssigkeit, steuern. Ein Material ist grundsätzlich nicht für sich allein thermophob oder thermophil, sondern immer nur in der Wechselwirkung mit einem anderen Material, etwa einem Lösungsmittel.

Die Simulationen wurden qualitativ überprüft, indem die auf die Beads 2a wirkende makroskopische thermophoretische Kraft, die zum lokalen Temperaturgradienten proportional ist, berechnet und hieraus das makroskopische, auf das Zahnrad 2 wirkende Drehmoment bestimmt wurde. Hieraus ergibt sich, dass die Winkelgeschwindigkeit proportional zur Temperaturdifferenz zwischen dem Zahnrad 2 und der Wand 1 ist, was in guter Übereinstimmung mit den in Figur 3 gezeigten Simulationsergebnissen ist.

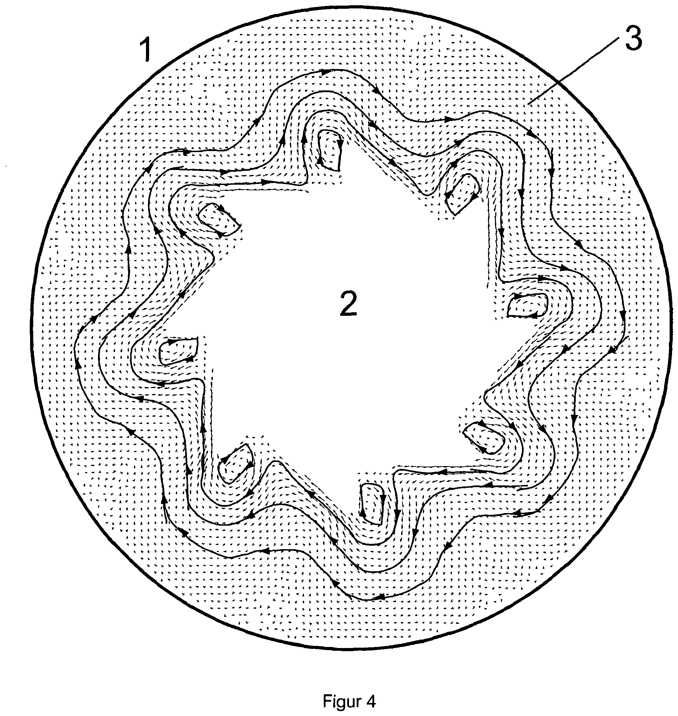

Figur 4 zeigt eine Anwendung des in Figur 1 gezeigten Ausführungsbeispiels als Pumpe. Hier ist das Zahnrad fixiert. Die thermophoretischen Kräfte bewegen an Stelle des Zahnrads die Arbeitsflüssigkeit. In Figur 4 ist die lokale Richtung des Strömungsfeldes durch kleine Pfeile eingezeichnet. Die durchgezogenen Linien zeigen die hieraus gebildete mittlere Richtung der Arbeitsflüssigkeit an. Wenn es an den Zähnen des Zahnrads auch lokale Verwirbelungen gibt, so bewegt sich die Arbeitsflüssigkeit per saldo im Uhrzeigersinn durch den Zwischenraum zwischen Zahnrad und Wand.

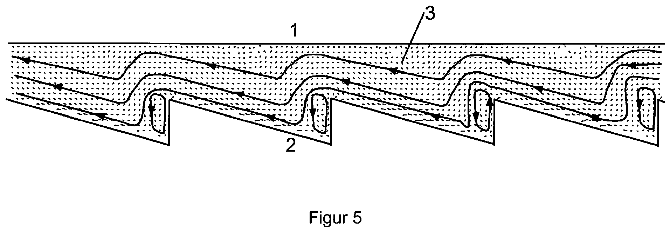

Figur 5 zeigt ein weiteres Ausführungsbeispiel der erfindungsgemäßen Vorrichtung, das als lineare Pumpe ausgelegt ist. Eine unstrukturierte Oberfläche 1, die auf einer ersten Temperatur gehalten wird, und eine analog zum Zahnrad in Sägezähnen strukturierte Oberfläche 2, die auf einer zweiten, höheren Temperatur gehalten wird, sind mechanisch starr miteinander verbunden und schließen den Hohlraum 3 ein, in dem sich die Arbeitsflüssigkeit befindet. Der Hohlraum hat die Form eines Kanals, durch den die Arbeitsflüssigkeit getrieben wird. Die kleinen Pfeile verdeutlichen das lokale Strömungsfeld in der Arbeitsflüssigkeit. Die durchgezogenen Linien zeigen die hieraus gebildete mittlere Richtung der Arbeitsflüssigkeit an. Sie wird bis auf einige Wirbel an den Zähnen von rechts nach links durch den Kanal transportiert.

## Patentansprüche

1. Vorrichtung zur Umwandlung von Wärme in Bewegungsenergie, umfassend zwei Oberflächen (1, 2a), die einen Hohlraum (3) einschließen, wobei mindestens eine dem Hohlraum zugewandte Oberfläche (2a) in mindestens einer zu der Oberfläche tangentialen Richtung asymmetrisch strukturiert ist, sowie Mittel, um beide Oberflächen (1, 2a) auf verschiedene Temperaturen zu bringen,
**dadurch gekennzeichnet, dass**
• in dem Hohlraum (3) eine Arbeitsflüssigkeit aus mindestens einer ersten Spezies von Teilchen angeordnet ist, in der mindestens eine auf der strukturierten Oberfläche (2a) angeordnete und/oder in der Arbeitsflüssigkeit enthaltene zweite Spezies von Teilchen bei Anlegen eines lokalen Temperaturgradienten zu einer Driftbewegung angeregt wird, und
• die Strukturierung der Oberfläche (2a) so beschaffen ist, dass sich bei Vorlage der verschiedenen Temperaturen an den beiden Oberflächen (1, 2a) in der Arbeitsflüssigkeit ein solcher lokaler Temperaturgradient entlang der tangentialen Richtung ausbildet.

2. Vorrichtung nach Anspruch 1, **dadurch gekennzeichnet, dass** die strukturierte Oberfläche (2a) der Umfang eines drehbar gelagerten Rades (2) ist.

3. Vorrichtung nach Anspruch 1, **dadurch gekennzeichnet, dass** beide Oberflächen (1, 2a) bis auf die Strukturierung zueinander parallel verlaufen und starr miteinander gekoppelt sind.

4. Vorrichtung nach einem der Ansprüche 1 bis 3, **dadurch gekennzeichnet, dass**, entlang der tangentialen Richtung gesehen, die Topographie der strukturierten Oberfläche (2a) in der Normalen zu dieser Oberfläche zunächst mit einer ersten Rate ansteigt und dann mit einer von der ersten Rate verschiedenen zweiten Rate abfällt.

5. Vorrichtung nach einem der Ansprüche 1 bis 4, **dadurch gekennzeichnet, dass** die Strukturierung der strukturierten Oberfläche (2a) sich entlang der tangentialen Richtung periodisch wiederholt.

6. Vorrichtung nach einem der Ansprüche 1 bis 5, **dadurch gekennzeichnet, dass** mindestens eine der Oberflächen (1, 2a) aus Polystyrol, Latex, Quarz, Gold oder einem Polyvinylalkohol besteht oder damit beschichtet ist.

7. Vorrichtung nach einem der Ansprüche 1 bis 6, **dadurch gekennzeichnet, dass** die Arbeitsflüssigkeit ein Lösungsmittel ist, in dem ein Feststoff gelöst, suspendiert oder dispergiert ist.

8. Vorrichtung nach Anspruch 7, **dadurch gekennzeichnet, dass** das Lösungsmittel Wasser oder ein organisches Lösungsmittel, insbesondere Ethanol oder ein anderer Alkohol, Benzol oder Toluol ist.

9. Vorrichtung nach einem der Ansprüche 7 bis 8, **dadurch gekennzeichnet, dass** der Feststoff ein Salz, ein Polymer oder ein Stoff, der mit dem Lösungsmittel ein Kolloid bildet, ist.

10. Vorrichtung nach einem der Ansprüche 7 bis 9, **dadurch gekennzeichnet, dass** Mittel zur Änderung der Konzentration des Feststoffs in dem Lösungsmittel vorgesehen sind.

11. Vorrichtung nach einem der Ansprüche 1 bis 9, **dadurch gekennzeichnet, dass** Mittel zur Umschaltung der Geometrie mindestens einer Oberfläche (1, 2a) zwischen mindestens zwei Zuständen vorgesehen sind.

12. Vorrichtung nach einem der Ansprüche 1 bis 11, **dadurch gekennzeichnet, dass** Mittel zur Änderung des Drucks oder der mittleren Temperatur in der Arbeitsflüssigkeit vorgesehen sind.

13. Vorrichtung nach einem der Ansprüche 1 bis 12, **dadurch gekennzeichnet, dass** Mittel zur Beaufschlagung der Arbeitsflüssigkeit mit einem elektrischen und/oder magnetischen Feld vorgesehen sind.

## Claims

1. A device for converting heat into kinetic energy, comprising two surfaces (1, 2a) which enclose a cavity (3), wherein at least one surface (2a), which faces the cavity, is structured asymmetrically in at least one direction tangential to the surface, as well as means for bringing both surfaces (1, 2a) to different temperatures,
**characterized in that**,
• in the cavity (3), there is arranged a working liquid consisting of at least one first species of particles, in which at least one second species of particles, which is arranged on the structured surface (2a) and/or contained in the working liquid, is excited to a drift movement when a local temperature gradient is applied, and
• the structuring of the surface (2a) is such that when the different temperatures are applied to the two surfaces (1, 2a) in the working liquid, such a local temperature gradient is formed along the tangential direction.

2. The device according to claim 1, **characterized in that** the structured surface (2a) is the circumference of a rotatably mounted wheel (2).

3. The device according to claim 1, **characterized in that** both surfaces (1, 2a) run parallel to one another except for the structuring and are rigidly coupled to one another.

4. The device according to any one of claims 1 to 3, **characterized in that**, viewed along the tangential direction, the topography of the structured surface (2a), in the normal to this surface, first increases at a first rate and then decreases at a second rate which is different from the first rate.

5. The device according to any one of claims 1 to 4, **characterized in that** the structuring of the structured surface (2a) is repeated periodically along the tangential direction.

6. The device according to any one of claims 1 to 5, **characterized in that** at least one of the surfaces (1, 2a) is composed of polystyrene, latex, quartz, gold or a polyvinyl alcohol or is coated therewith.

7. The device according to any one of claims 1 to 6, **characterized in that** the working liquid is a solvent in which a solid is dissolved, suspended or dispersed.

8. The device according to claim 7, **characterized in that** the solvent is water or an organic solvent, in particular ethanol or another alcohol, benzene or toluene.

9. The device according to any one of claims 7 to 8, **characterized in that** the solid is a salt, a polymer or a substance which forms a colloid with the solvent.

10. The device according to any one of claims 7 to 9, **characterized in that** means are provided for changing the concentration of the solid in the solvent.

11. The device according to any one of claims 1 to 9, **characterized in that** means are provided for switching the geometry of at least one surface (1, 2a) between at least two states.

12. The device according to any one of claims 1 to 11, **characterized in that** means are provided for changing the pressure or the mean temperature in the working liquid.

13. The device according to any one of claims 1 to 12, **characterized in that** means are provided for subjecting the working liquid to an electrical and/or magnetic field.

## Revendications

1. Installation de transformation de la chaleur en énergie cinétique, comprenant deux surfaces (1, 2a), qui enferment une cavité (3), au moins une surface (2a) tournée vers la cavité étant structurée dissymétriquement dans au moins une direction tangentielle à la surface, ainsi que des moyens pour porter les deux surfaces (1, 2a) à des températures différentes,
**caractérisée en ce que**
• dans la cavité (3) est mis un liquide de travail en au moins une première espèce de particules, dans lequel au moins une deuxième espèce de particules, disposée sur la surface (2a) structurée et/ou contenue dans le liquide de travail, est, à l'application d'un gradient de température local, excitée en un mouvement de dérive, et
• la structuration de la surface (2a) est telle qu'en présence des températures différentes sur les deux surfaces (1, 2a), il se constitue, dans le liquide de travail, un tel gradient de température local dans la direction tangentielle.

2. Installation suivant la revendication 1, **caractérisée en ce que** la surface (2a) structurée est le pourtour d'une roue (2) montée tournante.

3. Installation suivant la revendication 1, **caractérisée en ce que** les deux surfaces (1, 2a) s'étendent parallèlement l'une·à l'autre, à l'exception de la structuration, et sont accouplées rigidement entre elles.

4. Installation suivant l'une des revendications 1 à 3, **caractérisée en ce que**, considéré suivant la direction tangentielle, la topographie de la surface (2a) structurée s'élève, suivant la normale à cette surface, d'abord à un premier taux et ensuite s'abaisse à un deuxième taux différent du premier taux.

5. Installation suivant l'une des revendications 1 à 4, **caractérisée en ce que** la structuration de la surface (2a) structurée se répète périodiquement dans la direction tangentielle.

6. Installation suivant l'une des revendications 1 à 5, **caractérisée en ce qu'**au moins l'une des surfaces (1, 2a) est en polystyrène, latex, quartz, or ou un alcool polyvinylique ou en est revêtue.

7. Installation suivant l'une des revendications 1 à 6, **caractérisé en ce que** le liquide de travail est un solvant, dans lequel une substance solide est dissoute, en suspension ou dispersée.

8. Installation suivant la revendication 7, **caractérisée en ce que** le solvant est de l'eau ou un solvant organique, notamment de l'éthanol ou un autre alcool, du benzène ou du toluène.

9. Installation suivant l'une des revendications 7 à 8, **caractérisée en ce que** la substance solide est un sel, un polymère ou une substance, qui forme un colloïde avec le solvant.

10. Installation suivant l'une des revendications 7 à 9, **caractérisée en ce qu'**il est prévu des moyens de modification de la concentration de la substance solide dans le solvant.

11. Installation suivant l'une des revendications 1 à 9, **caractérisée en ce qu'**il est prévu des moyens de changement de la géométrie d'au moins d'une surface (1, 2a) entre au moins deux états.

12. Installation suivant l'une des revendications 1 à 11, **caractérisée en ce qu'**il est prévu des moyens pour faire varier de la pression ou de la température moyenne du liquide de travail.

13. Installation suivant l'une des revendications 1 à 12, **caractérisée en ce qu'**il est prévu des moyens pour soumettre le liquide de travail à un champ électrique et/ou magnétique.
